# EUROPÄISCHE PATENTSCHRIFT

(11) **EP 1 039 053 B1**
(45) Veröffentlichungstag und Bekanntmachung des Hinweises auf die Patenterteilung: **13.10.2004**
(21) Anmeldenummer: 00105801.5
(22) Anmeldetag: 18.03.2000
(51) Int. Cl.: E03F 5/10, B01D 21/24

(54) **Einheit bestehend aus Flüssigkeitsbehälter und Vorrichtung zur Reinhaltung des Flüssigkeitsbehälters**
Unit comprising a liquid tank and a device for keeping the liquid tank clean
Ensemble comprenant un réservoir de liquides et un dispositif pour la maintenance de la propreté du réservoir

(30) Priorität: 25.03.1999 DE 29905492 U
(43) Veröffentlichungstag der Anmeldung: 27.09.2000
(73) Patentinhaber: KSB Aktiengesellschaft, 67227 Frankenthal (DE)
(72) Erfinder: Szlama, Peter, 76751 Jockgrim (DE)

(56) Entgegenhaltungen:
- EP-A- 0 280 648
- DE-A- 3 223 508
- DE-A- 3 617 111
- DE-A- 3 923 820
- DE-A- 19 718 499
- DE-B- 2 902 983

## Beschreibung

Gegenstand der Erfindung ist ein Flüssigkeitsbehälter, insbesondere zur Aufnahme einer mit Feststoffen belasteten Flüssigkeit, kombiniert mit einer Vorrichtung zur Belüftung und/oder Reinhaltung des Flüssigkeitsbehälters, wobei ein von einer Druckquelle bereitgestellter Förderstrom in den Flüssigkeitsbehälter geleitet wird.

Eine derartige Vorrichtung ist bekannt durch die DE-C-3244539. Mit Hilfe mehrerer nahe der Beckensohle angebrachter Strahlrohre wird dort der Inhalt des Beckens in eine Umwälzströmung versetzt. Die in der im Becken vorhandenen Flüssigkeit befindlichen Schmutzteilchen werden auf diese Weise von der Beckensohle aufgewirbelt und in der Schwebe gehalten. Eine Reinigung des Beckens während der letzten Phase der Beckenentleerung ergibt sich bereits dadurch, daß bei abnehmendem Beckeninhalt die Energiedichte und damit die Reinigungsleistung ansteigt. Auch nach vollständiger Entleerung des Beckens kann noch durch die aus den Strahlrohren austretende Flüssigkeit der Beckenboden abgespritzt werden.

In der DE-C-3244539 wird im übrigen noch gelehrt, daß die Strahlrohre mit spitzem Winkel auf die Seitenwände oder zur Beckensohle hin gerichtet oder schwenkbar sein können. Weitere Angaben über die Anordnung der Strahlrohre werden aber nicht gemacht.

Durch die EP-B-0257298 ist eine weitere Vorrichtung der eingangs genannten Art bekannt, mit der eine gegenüber der Umwälzströmung wesentlich weiter reichende Reinigungswirkung dadurch erzielt wird, daß in die im Behälter befindliche Flüssigkeit eine Stoßwellen-Strömung eingeleitet wird. Nimmt die von der Umwälzströmung auf die Feststoffe ausgeübte aufwirbelnde Wirkung mit der Entfernung vom Umwälzaggregat stark ab, so erzeugt die Stoßwellen-Strömung fortschreitende Wellenzüge mit Koppeleffekt, deren intensive Reinigungswirkung auch auf einer längeren Strecke nur geringfügig abnimmt. Bei der Restentleerung wird durch eine strömungsrichtende und flächendeckende Wirkung eine gezielte großflächige Reinigungsströmung durch rollende Wellen erreicht, die zu einer gründlichen Aufwirbelung und Austragung von Feststoffen führt.

Nun stellt aber die Belüftung und Reinigung breiterer Flüssigkeitsbehälter ein Problem dar, dem man bisher nur mit großem Aufwand zu begegnen vermochte. Eine erste Möglichkeit wurde darin gesehen, mehrere mit Strahldüsen versehene Kreiselpumpen nebeneinander so anzuordnen, daß jeweils die gesamte Behälterbreite von umwälzenden und reinigenden Flüssigkeitsstrahlen erfaßt wurde. Ein Beispiel hierfür gibt die DE-A-3923820, die eine Anlage mit zwei Kreiselpumpen zeigt, deren Strahlrohre gegen die Seitenwände des Behälters so gerichtet sind, daß sich die von ihnen erzeugten Umwälzströmungen in der Längsachse des Behälters treffen.

Eine weitere, vielfach auch zur vollen Zufriedenheit arbeitende Möglichkeit besteht darin, das Strahlrohr, gegebenenfalls auch die Pumpe, schwenkbar auszuführen und mittels eines Antriebes über einen vorgegebenen Winkelbereich zu verschwenken. Die DE-C-3700055 und die DE-U-8909000 zeigen Beispiele für eine solche Lösung. Allerdings ist auch diese Lösung nicht in jedem Fall und für jeden Behälter geeignet. Vor allem, wenn in dem Behälter in Längsrichtung verlaufende Kaskaden angeordnet sind, muß diese Ausführung versagen, da ihr Reinigungsstrahl allenfalls den Anfang der meisten der in Längsrichtung verlaufenden Bodenbereiche erreicht.

Schließlich ist noch eine Vorrichtung zur Feststoff- und Schlammräumung in Sedimentationsbecken zu erwähnen, bei der verschiedene, in einem System miteinander verbundene Rohre mit ihren zum Boden des Beckens gerichteten Öffnungen derart gegeneinander versetzt angeordnet sind, daß sie jeweils in der Mitte einzelner Teilbereiche des Beckens münden. Bei dieser, in der DE-A-19718499 offenbarten Vorrichtung wird über die Rohre ein Sog ausgeübt, der zum Abtransport des am Beckenboden befindlichen Schlamms und der Feststoffe genutzt wird. Zur Erzeugung des Soges dient eine Vorrichtung, wie zum Beispiel eine Pumpe, mit der die Rohrleitungen über steuerbare Ventile verbunden sind.

Die Ventile können zur Erzeugung eines kontinuierlichen Druckes oder von Saugstößen angesteuert werden.

Grundsätzlich ließe sich die Vorrichtung der DE-A-19718499 auch in ihrer Wirkrichtung derart umkehren, daß statt eines Soges ein Druck über das Rohrleitungssystem ausgeübt würde. Allerdings wäre eine solche Vorrichtung überfordert, wenn sie zur Einleitung einer der Reinigung dienenden Flüssigkeit genutzt würde. Abgesehen davon, daß die Druckströmung bei den beschriebenen elliptischen Öffnungen der Rohrleitungen nicht zum Boden, sondern parallel zu diesem gerichtet wäre, also nur eine geringe Reinigungswirkung erzielte, wäre vor allem die über das Becken verstreute Aufteilung der Rohrmündungen kaum geeignet, Sediment über die gesamte Breite und Länge des Beckens aufzuwirbeln und wegzuspülen. Da selbst bei abwärts gerichteten Rohrmündungen große Bereiche des Beckens nicht oder nur unzureichend von den Flüssigkeitsstrahlen erfaßt würden, bildeten sich Inseln von Ablagerungen, die schließlich gesondert entfemt werden müßten.
Eine weitere Vorrichtung zur Reinhaltung eines Flüssigkeitsbehälters ist aus der DE-A-3617111 bekannt.

Der Erfindung liegt die Aufgabe zugrunde, eine Einheit aus Behälter und Vorrichtung der eingangs genannten Art zu schaffen, welche geeignet ist, auch sehr breite Behälter, ebenso wie Behälter mit im Bodenbereich angeordneten Zwischenwänden oder Kaskaden, mit geringem Aufwand vollständig zu reinigen und zu belüften.

Die gestellte Aufgabe wird erfindungsgemäß dadurch gelöst, daß der druckführende Anschluß über Rohrleitungen mit mehreren in dem Flüssigkeitsbehälter angeordneten, mit vorgeschalteten Absperreinrichtungen versehenen Strahldüsen verbunden ist, wobei die einzelnen Absperreinrichtungen im übrigen mit einer gemeinsamen Steuereinrichtung verbunden sind.

Die erfindungsgemäße Vorrichtung ist vor allem geeignet für sehr breite Behälter, für Behälter mit längsgerichteten Zwischenwänden oder Kaskaden, für Behälter mit geringem Gefälle und für energiegebundene Anlagen. Die Vorrichtung erlaubt die Anordnung einer Vielzahl von Strahldüsen, die nur von einer Druckquelle, beispielsweise einer Kreiselpumpe, gespeist werden müssen. Die allen Strahldüsen vorgeschalteten Absperreinrichtungen ermöglichen es, daß jeweils einzelne Strahldüsen oder mehrere Strahldüsen gemeinsam mit einem für den Belüftungs- oder Reinigungsbetrieb ausreichenden Förderdruck von der Druckquelle beliefert werden können. So ist es beispielsweise möglich, die Strahldüsen jeweils einzeln und nacheinander einzusetzen, um so einen kraftvollen Förderstrom zu erzeugen, der sich aufgrund seiner fortlaufenden Veränderung über die gesamte Behälterbreite erstreckt.

Die Steuerung der Absperreinrichtungen kann so erfolgen, daß jeweils über mehrere gleichzeitig betriebene Strahldüsen ein Förderstrom in den Flüssigkeitsbehälter geleitet wird. Hierdurch können Förderströme erzeugt werden, die sich in einer die Belüftungs- und Reinigungsleistung steigernden Weise beeinflussen und ergänzen.

Da eine beliebige Steuerung der den Strahldüsen vorgeschalteten Absperreinrichtungen möglich ist, kann auch jede Absperreinrichtung so gesteuert werden, daß aus der ihr nachgeschalteten Strahldüse eine Stoßwellen-Strömung austritt. Außerdem kann die Steuerung verschiedener Absperreinrichtungen so ausgelegt sein, daß sich die aus verschiedenen Strahldüsen austretenden Förderströme zu einer resultierenden Stoßwellen-Strömung ergänzen.

Als Druckquelle kann in bekannter Weise eine Kreiselpumpe dienen, die innerhalb oder außerhalb des Flüssigkeitsbehälters angeordnet ist. Besonders vorteilhaft ist es, wenn die Kreiselpumpe in einem mit dem Flüssigkeitsbehälter verbundenen Pumpensumpf angeordnet ist.

Die Steuerung der Kreiselpumpe und/oder der Absperreinrichtungen kann mittels eines in einer Rechnereinheit gespeicherten Programmes erfolgen. Mit einem solchen Programm kann eine automatische Anpassung an alle zu erwartenden Zustände einer Anlage erfolgen. So können beispielsweise verschiedene Voreinstellungen und an verschiedenen Orten erfolgende Messungen in den Ablauf des Programms einbezogen werden.

Eine gemäß der Erfindung aufgebaute Vorrichtung ist mit einem dem druckführenden Anschluß nachgeschalteten Verteiler ausgestattet, von dem aus zwei Rohre in Richtung der Seitenwände des Flüssigkeitsbehälters führen, wobei von diesen Rohren in regelmäßigen Abständen Buckelrohre ausgehen, welche zu den mit vorgeschalteten Absperreinrichtungen versehenen Strahldüsen führen. Der Verteiler kann dabei von einem T-Rohr oder einem Hosenrohr gebildet werden.

Eine vorteilhafte Ausgestaltung der erfindungsgemäßen Vorrichtung für einen Behälter mit einem in Längsrichtung durch Zwischenwände oder Kaskaden aufgeteilten Boden sieht vor, daß für jeden einzelnen der in Längsrichtung verlaufenden Bodenbereiche eine Strahldüse vorgesehen ist.

Für den größten Teil der in Frage kommenden Behälter dürfte es ausreichend sein, wenn eine einzelne Kreiselpumpe über eine sich verzweigende Rohrleitung alle Strahldüsen der Anlage mit Flüssigkeit beschickt. Eine der Erfindung folgende Vorrichtung kann aber selbstverständlich auch mit mehreren parallel angeordneten Kreiselpumpen versehen sein, die jeweils einen Teil der Strahldüsen mit Flüssigkeit beschicken.

Um die Reinigungswirkung der Strahldüsen zu erhöhen, kann es vorteilhaft sein, wenn der Strahlwinkel und die Strahlrichtung der Strahldüsen einstellbar sind. Vor allem ist es von Vorteil, wenn die Strahldüsen als Injektoren ausgebildet sind, welche über ein Belüftungsrohr Luft in den über sie geleiteten Förderstrom einsaugen.

Anhand zweier Ausführungsbeispiele wird die Erfindung näher erläutert. Die Zeichnung zeigt in
- Fig. 1: die Seitenansicht einer erfindungsgemäßen Vorrichtung,
- Fig. 2: eine Ansicht der Vorrichtung der Fig. 1 mit Blickrichtung zur entfernt liegenden Wand des die Vorrichtung aufnehmenden Behälters,
- Fig. 3: eine Draufsicht auf die Vorrichtung der Fig. 1 und 2,
- Fig. 4: eine weitere erfindungsgemäße Vorrichtung, die hier in einem mit in Längsrichtung verlaufenden Kaskaden versehenen Becken angeordnet ist,
- Fig. 5: eine Draufsicht auf die Vorrichtung und das Becken der Fig. 4.

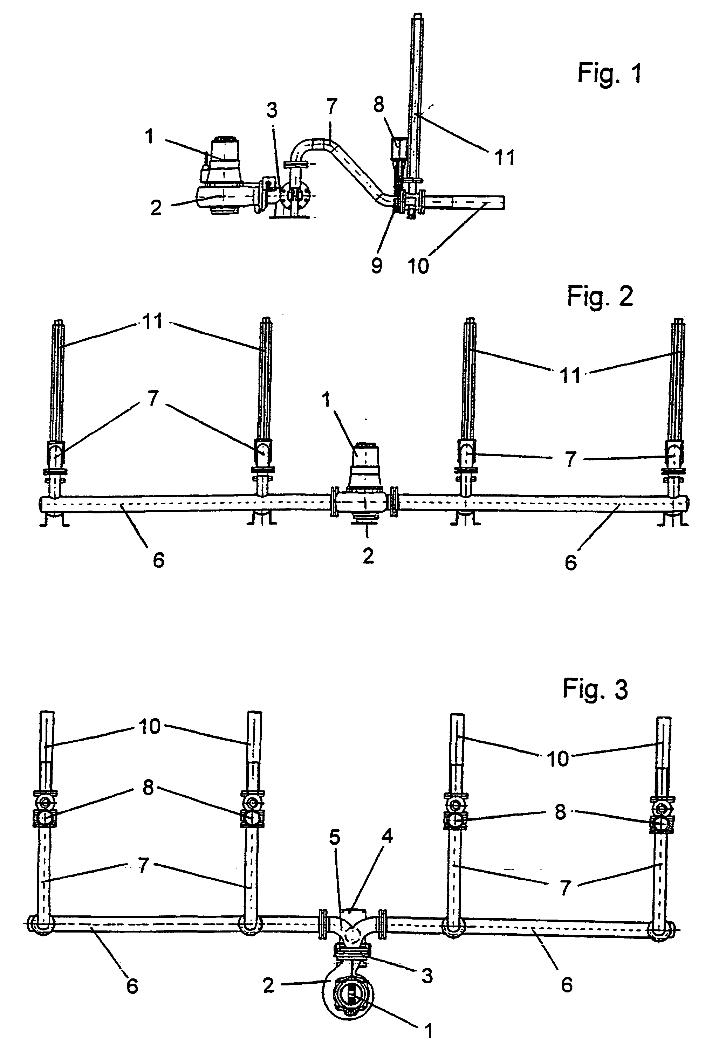

Die Vorrichtung der Fig. 1 bis 3 ist in einem hier nicht dargestellten Behälter angeordnet. Sie verfügt über eine von einem Elektromotor 1 angetriebene Kreiselpumpe 2, welche von einer Einhängevorrichtung 3 getragen wird. Die Einhängevorrichtung 3 ist mittels eines Bleches 4 am Boden des Beckens befestigt; sie trägt im übrigen ein Hosenrohr 5, das die von der Kreiselpumpe 2 geförderte Flüssigkeit in zwei Verteilerrohre 6 weiterleitet. Von den Verteilerrohren 6 gehen vier Buckelrohre 7 aus, an deren Ende jeweils eine von einem Servomotor 8 betätigte Absperreinrichtung 9 vorgesehen ist.

Eine solche Absperreinrichtung 9 ist jeweils einer als Injektor ausgebildeten Strahldüse 10 vorgeschaltet. Außerdem ist eine in die Strahldüse 10 mündende Belüftungsleitung 11 vorgesehen, deren Ansaugöffnung oberhalb des höchstmöglichen Flüssigkeitsspiegels im Behälter liegt.

In der Zeichnung nicht dargestellt sind die von einer zentralen Stelle kommenden Verbindungsleitungen, die zum Elektromotor 1 und zu den Servomotoren 8 führen. Ebenfalls nicht dargestellt ist eine zentrale Rechnereinheit, die für das Einund Ausschalten des Elektromotors 1 und für die Steuerung der Servomotoren 8 zuständig ist.

Der Betrieb der Rechnereinheit erfolgt mittels eines Programms, das in Abhängigkeit von vorgegebenen und aktuell gemessenen Daten den Betrieb der Vorrichtung steuert. So wird also in Abhängigkeit von dem Programm von der zentralen Rechnereinheit der Elektromotor 1 der Kreiselpumpe 2 je nach Bedarf und unter Berücksichtigung etwa notwendiger Ruhezeiten ein- und ausgeschaltet. Entsprechend dem jeweils ablaufenden Programm werden über die Servomotoren 8 einzelne Absperreinrichtungen 9 geöffnet oder geschlossen.

So kann beispielsweise jeweils eine Absperreinrichtung 9 geöffnet sein, während die übrigen Absperreinrichtungen 9 geschlossen sind. Dieser Zustand kann für einen vorgegebenen Zeitraum erhalten bleiben, so daß der von der Kreiselpumpe 2 erzeugte Förderstrom ausschließlich über eine Strahldüse 10 in das Becken geleitet wird. Bei Ablauf der vorgegebenen Zeit kann nun diese erste Absperreinrichtung 9 geschlossen und gleichzeitig eine zweite Absperreinrichtung 9 geöffnet werden. Dies kann die Absperreinrichtung 9 einer benachbarten Strahldüse 10 oder einer entfernter gelegenen Strahldüse 10 sein. Die Strahldüsen 10 können auch mit beliebiger Reihenfolge und Dauer nacheinander in Funktion treten. Für die Reihenfolge der Strahldüsen und deren Strahldauer sind die jeweiligen Anlagenerfordernisse maßgeblich. Das in der Rechnereinheit ablaufende Programm nutzt dabei die beim Betrieb einer solchen Anlage gewonnenen Erfahrungen und Erkenntnisse zur Steuerung der verschiedenen Absperreinrichtungen 9.

Grundsätzlich lassen sich die einzelnen Takte zur Steuerung der Absperreinrichtungen auch mit Hilfe eines einfacheren, fest vorgegebenen, beispielsweise in einem Chip gespeicherten Programms durchführen. Selbst eine von Hand vorgenommene Steuerung kann zumindest für einen gewissen Zeitraum den von der Anlage gestellten Anforderungen entsprechen. Das in einer Rechnereinheit gespeicherte Programm besitzt aber den Vorteil, daß es über einen theoretisch unbegrenzten Zeitraum einer Vielzahl von sich stetig ändernden Anforderungen gerecht zu werden vermag und daß es sogar mit Blick auf notwendige oder empfehlenswerte Anpassungen und Ergänzungen in einzelnen Teilen umprogrammiert werden kann.

Das in der Rechnereinheit gespeicherte Programm kann auch ohne weiteres den Ablauf komplizierterer Vorgänge steuern. Es kann also beispielsweise jeden einzelnen Servomotor 8 so steuern, daß durch die sich öffnende und schließende Absperreinrichtung Stoßwellen in der Strahldüse 10 und dem dahinter liegenden Beckenbereich erzeugt werden. Außerdem können die aus zwei verschiedenen Strahldüsen 10 geförderten Ströme so beeinflußt werden, daß sich eine resultierende Stoßwellen-Strömung ergibt.

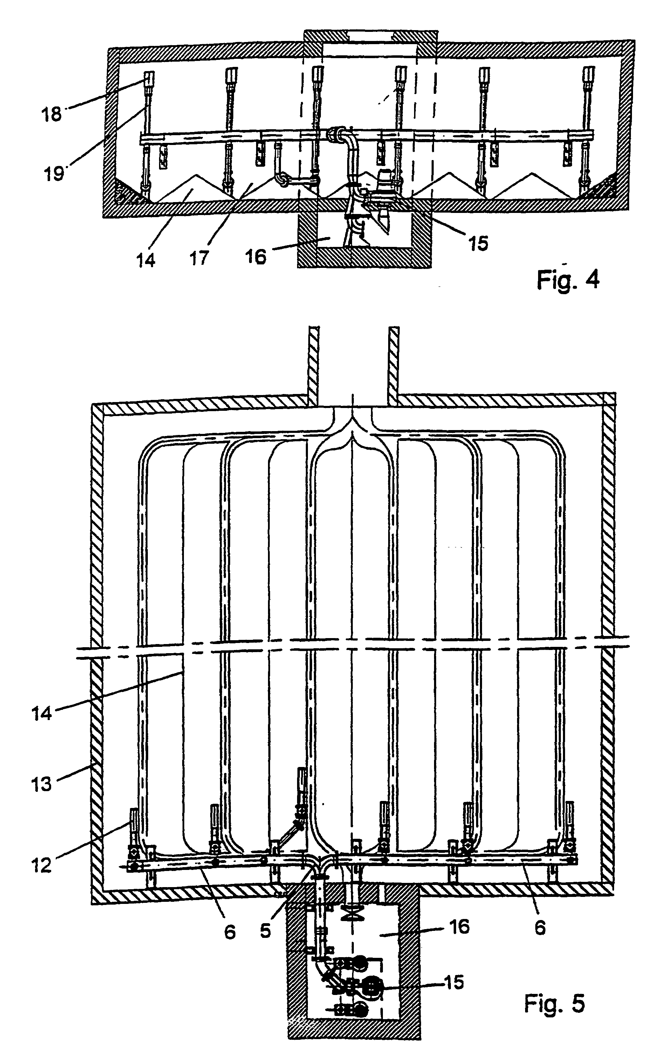

Die in den Fig. 4 und 5 dargestellte Vorrichtung arbeitet im wesentlichen nach dem oben dargestellten Prinzip. Die in den Fig. 4 und 5 dargestellte Anlage unterscheidet sich aber in einigen wesentlichen Punkten von einer Anlage, wie sie beim Ausführungsbeispiel der Fig. 1 bis 3 geschildert wurde. Beachtenswert ist vor allem, daß der hier verwendete Flüssigkeitsbehälter 13 mit in Längsrichtung verlaufenden Kaskaden 14 versehen ist.

Damit die von einer Kreiselpumpe 15 aus einem Pumpensumpf 16 geförderte Flüssigkeit auch in den zwischen den Kaskaden 14 verlaufenden Bodenbereichen 17 eine möglichst große Reinigungswirkung erzielt, ist für jeden dieser Bodenbereiche 17 eine Strahldüse 12 vorgesehen. Den Strahldüsen 12 vorgeschaltet ist jeweils eine von einem Hubmagneten 18 betätigte - in den Fig. 4 und 5 nicht erkennbare - Absperreinrichtung. Die Absperreinrichtung, die von einer Drosselklappe gebildet wird, und deren auf einem Belüftungsrohr 19 angeordneter Hubmagnet 18 entsprechen im wesentlichen der in der EP 0 257 298 B1 als Beispiel dargestellten Ausführung. Somit kann auch jede einzelne Strahldüse 12 in der Weise arbeiten, wie es in dem zitierten Dokument geschildert wird. Das bedeutet, daß jede der Strahldüsen 12 in dem ihr zugeordneten Bodenbereich 17 eine weit reichende Stoßwellen-Strömung erzeugen kann, wobei die übrigen Strahldüsen 12 währenddessen außer Funktion bleiben können.

Die einzelnen Bodenbereiche 17 können daher nacheinander und weitgehend unabhängig voneinander gereinigt werden. Selbstverständlich können aber auch bei dieser Ausführung mehrere Strahldüsen 12 gleichzeitig arbeiten. Aufgrund der Kaskaden 14 ist jedoch mit einer etwas anderen Wirkung zu rechnen als bei einer glatten Beckensohle.

## Patentansprüche

1. Einheit bestehend aus einem Flüssigkeitsbehälter (13), insbesondere zur Aufnahme einer mit Feststoffen belasteten Flüssigkeit, und einer Vorrichtung zur Belüftung und/oder Reinhaltung des Flüssigkeitsbehälters (13), mit einer Druckquelle (2,15) zum Bereitstellen eines in den Flüssigkeitsbehälter (13), zu leitenden Förderstroms **dadurch gekennzeichnet, daß** die Druckquelle (2, 15) über Rohrleitungen (5, 6, 7) mit mehreren in dem Flüssigkeitsbehälter (13) angeordneten, mit vorgeschalteten Absperreinrichtungen (9) versehenen Strahldüsen (10, 12) verbunden ist, wobei die einzelnen Absperreinrichtungen (9) im übrigen mit einer gemeinsamen Steuereinrichtung verbunden sind.

2. Einheit nach Anspruch 1, **dadurch gekennzeichnet, daß** die Druckquelle von einer Kreiselpumpe (2, 15) gebildet wird.

3. Einheit nach Anspruch 2, **dadurch gekennzeichnet, daß** die Kreiselpumpe (2) in dem Flüssigkeitsbehälter angeordnet ist.

4. Einheit nach Anspruch 2, **dadurch gekennzeichnet, daß** die Kreiselpumpe (15) in einem mit dem Flüssigkeitsbehälter (13) verbundenen Pumpensumpf (16) angeordnet ist.

5. Einheit nach Anspruch 2, **dadurch gekennzeichnet, daß** die Kreiselpumpe (15) außerhalb des Flüssigkeitsbehälters (13) in Trockenaufstellung angeordnet ist.

6. Einheit nach Anspruch 1 oder 2, **gekennzeichnet durch** einen der Druckquelle (2, 15) nachgeschalteten Verteiler (5), von dem aus zwei Rohre (6) in Richtung der Seitenwände des Flüssigkeitsbehälters (13) führen, wobei von diesen Rohren (6) in regelmäßigen Abständen Buckelrohre (7) ausgehen, welche zu den mit vorgeschalteten Absperreinrichtungen (9) versehenen Strahldüsen (10, 12) führen.

7. Einheit nach Anspruch 6, **dadurch gekennzeichnet, daß** der Verteiler von einem T-Rohr gebildet wird.

8. Einheit nach Anspruch 6, **dadurch gekennzeichnet, daß** der Verteiler von einem Hosenrohr (5) gebildet wird.

9. Einheit nach einem der Ansprüche 1 bis 7, die in einem Flüssigkeitsbehälter (13) mit einem in Längsrichtung durch Zwischenwände oder Kaskaden (14) aufgeteilten Boden eingesetzt ist, **dadurch gekennzeichnet, daß** für jeden einzelnen der in Längsrichtung verlaufenden Bodenbereiche (17) eine Strahldüse (12) vorgesehen ist.

10. Einheit nach einem der Ansprüche 1 bis 8, **dadurch gekennzeichnet, daß** die Strahlwinkel der Strahldüsen (10, 12) in bezug auf den Boden und/oder die Achse des Flüssigkeitsbehälters (13) einstellbar sind.

11. Einheit nach einem der Ansprüche 1 bis 9, **dadurch gekennzeichnet, daß** die Strahldüsen (10, 12) als Injektoren ausgebildet sind, welche über ein Belüftungsrohr (11, 19) bei Gebrauch Luft in den über sie geleiteten Förderstrom einsaugen.

## Claims

1. Unit consisting of a liquid container (13), in particular for holding a liquid loaded with solids, and a device for ventilating and/or keeping clean the liquid container (13), having a pressure source (2, 15) for providing a delivery stream to be directed into the liquid container (13), **characterized in that** the pressure source (2, 15) is connected via pipelines (5, 6, 7) to a plurality of jet nozzles (10, 12) arranged in the liquid container (13) and provided with upstream shutoff devices (9), the individual shutoff devices (9) being connected, moreover, to a common control device.

2. Unit according to Claim 1, **characterized in that** the pressure source is formed by a centrifugal pump (2, 15).

3. Unit according to Claim 2, **characterized in that** the centrifugal pump (2) is arranged in the liquid container.

4. Unit according to Claim 2, **characterized in that** the centrifugal pump (15) is arranged in a pump sump (16) connected to the liquid container (13).

5. Unit according to Claim 2, **characterized in that** the centrifugal pump (15) is arranged outside the liquid container (13) in a dry installation.

6. Unit according to Claim 1 or 2, **characterized by** a distributor (5) which is downstream of the pressure source (2, 15) and from which two pipes (6) lead in the direction of the side walls of the liquid container (13), boss pipes (7) departing from these pipes (6) at regular intervals and leading to the jet nozzles (10, 12) provided with upstream shutoff devices (9).

7. Unit according to Claim 6, **characterized in that** the distributor is formed by a T-pipe.

8. Unit according to Claim 6, **characterized in that** the distributor is formed by a Y-pipe (5).

9. Unit according to one of Claims 1 to 7 which is used in a liquid container (13) having a bottom split up in a longitudinal direction by baffles or cascades (14), **characterized in that** a jet nozzle (12) is provided for each individual one of the bottom regions (17) running in the longitudinal direction.

10. Unit according to one of Claims 1 to 8, **characterized in that** the jet angles of the jet nozzles (10, 12) can be set with reference to the bottom and/or the axis of the liquid container (13).

11. Unit according to one of Claims 1 to 9, **characterized in that** the jet nozzles (10, 12) are designed as injectors which, when in use, draw in air by a ventilating pipe (11, 19) into the delivery stream directed by them.

## Revendications

1. Ensemble se composant d'un réservoir de liquide (13), notamment pour recevoir un liquide chargé de matières solides, et d'un dispositif pour aérer et/ou maintenir la propreté du réservoir de liquide (13), comprenant une source de pression (2, 15) pour fournir un courant de refoulement devant être conduit dans le réservoir de liquide (13), **caractérisé en ce que** la source de pression (2, 15) est connectée par le biais de conduites tubulaires (5, 6, 7) à plusieurs buses à jet (10, 12) disposées dans le réservoir de liquide (13) et pourvues de dispositifs de blocage montés en avant (9), les dispositifs de blocage individuels (9) étant connectés par ailleurs à un dispositif de commande commun.

2. Ensemble selon la revendication 1, **caractérisé en ce que** la source de pression est formée par rapport à une pompe centrifuge (2, 15).

3. Ensemble selon la revendication 2, **caractérisé en ce que** la pompe centrifuge (2) est disposée dans le réservoir de liquide.

4. Ensemble selon la revendication 2, **caractérisé en ce que** la pompe centrifuge (15) est disposée dans un puisard de pompe (16) connecté au réservoir de liquide (13).

5. Ensemble selon la revendication 2, **caractérisé en ce que** la pompe centrifuge (15) est disposée en dehors du réservoir de liquide (13) suivant une disposition sèche.

6. Ensemble selon la revendication 1 ou 2, **caractérisé par** un distributeur (5) monté après la source de pression (2, 15), duquel deux tubes (6) partent dans la direction des parois latérales du réservoir de liquide (13), des tubes à bossages (7) partant de ces tubes (6) à intervalles réguliers, lesquels conduisent aux buses à jet (10, 12) pourvues des dispositifs de blocage montés en avant (9).

7. Ensemble selon la revendication 6, **caractérisé en ce que** le distributeur est formé par un tube en T.

8. Ensemble selon la revendication 6, **caractérisé en ce que** le distributeur est formé par un tuyau-culotte (5).

9. Ensemble selon l'une quelconque des revendications 1 à 7, qui est inséré dans un réservoir de liquide (13) avec un fond divisé dans la direction longitudinale par des parois intermédiaires ou cascades (14), **caractérisé en ce que** pour chacune des régions de fond individuelle s'étendant dans la direction longitudinale (17), on prévoit une buse à jet (12).

10. Ensemble selon l'une quelconque des revendications 1 à 8, **caractérisé en ce que** les angles de jet des buses à jet (10, 12) peuvent être ajustés par rapport au fond et/ou à l'axe du réservoir de liquide (13).

11. Ensemble selon l'une quelconque des revendications 1 à 9, **caractérisé en ce que** les buses à jet (10, 12) sont réalisées sous forme d'injecteurs qui, lors de l'utilisation, aspirent par le biais d'un tube d'aération (11, 19) de l'air dans le courant de refoulement guidé à travers eux.
